# EUROPÄISCHE PATENTANMELDUNG

(11) **EP 2 305 522 A1**
(43) Veröffentlichungstag der Anmeldung: **06.04.2011**
(21) Anmeldenummer: 10010116.1
(22) Anmeldetag: 22.09.2010
(51) Int. Cl.: B60T 7/02, B60T 7/04, B60T 7/08, B60T 7/10, B60T 7/12, B60T 17/22

(54) **Betätigungsvorrichtung für eine Feststellbremse**

(30) Priorität: 02.10.2009 DE 202009013243 U
(71) Anmelder: Dietz-automotive GmbH & Co. KG, 73265 Dettingen unter Teck (DE)
(72) Erfinder: Barcin, Baris, 70771 Leinfelden-Echterdingen (DE)
(74) Vertreter: Ruckh, Rainer Gerhard

(57) **Zusammenfassung**

Die erfindungsgemäße Betätigungsvorrichtung weist eine Feststellbremse mit einem an einem Lagerbock schwenkbar gelagerten Handbremshebel, welcher mittels einer Festsetzeinrichtung in einer vorgegebenen Schwenkstellung fixierbar ist, auf. Die Festsetzeinrichtung weist ein am Lagerbock fixiertes Sperrsegment und eine beweglich gelagerte Sperrklinke, sowie eine im Handbremshebel geführte und in Wirkverbindung mit der Festsetzeinrichtung stehende Betätigungsstange auf. Der Handbremshebel weist eine Führung auf, in welcher die Betätigungsstange in Längsrichtung verschiebbar gelagert ist. Eine Gelenkverbindung ist zwischen der Sperrklinke (10) und der Betätigungsstange (7) dadurch herstellbar, dass ein Segment der Sperrklinke (10) zwischen einem Anschlag (16) und einem Federelement (17) gelagert ist, welche Bestandteil der Betätigungsstange (7) sind.

## Beschreibung

Die Erfindung betrifft eine Betätigungsvorrichtung für eine Feststellbremse.

Betätigungsvorrichtungen für Feststellbremsen werden insbesondere in Kraftfahrzeugen eingesetzt. Eine derartige Betätigungsvorrichtung ist beispielsweise aus der DE 20 2009 007 477 U1 bekannt.

Die dort beschriebene Betätigungsvorrichtung umfasst einen Handbremshebel, der an einem Lagerbock schwenkbar gelagert ist. In dem Handbremshebel ist eine Betätigungsstange geführt, die mittels eines Druckknopfs betätigt werden kann und welche an eine Festsetzeinrichtung gekoppelt ist. Die Festsetzeinrichtung dient dazu, den Handbremshebel in einer bestimmten Schwenkstellung zu fixieren. Durch Betätigen des Druckknopfs kann die Festsetzeinrichtung gelöst werden und der Handbremshebel kann in eine andere Schwenkstellung eingebracht werden, in der er wiederum durch die Festsetzeinrichtung fixierbar ist.

Die Festsetzeinrichtung weist eine Sperrklinke und ein Sperrsegment auf. Das Sperrsegment ist am Lagerbock befestigt und weist eine Leiste mit Rastzähnen auf. Die Sperrklinke weist an ihrem unteren Ende eine Rastnase auf, die an den Rastzähnen des Sperrsegments eingerastet werden kann. Das obere Ende der Sperrklinke ist mit der Betätigungsstange gelenkig gekoppelt.

Die Gelenkverbindung zwischen der Sperrklinke und der Betätigungsstange wird dadurch hergestellt, dass die Sperrklinke in der Betätigungsstange eingeclipst wird.

Hierzu weist die Sperrklinke an einem längsseitigen Ende ein Segment auf, in welchem ein Langloch eingearbeitet ist, welches zum Einclipsen in der Aufnahme der Betätigungsstange dient. Nach Einclipsen der Sperrklinke ist an der Betätigungsstange ein Zapfen als Bestandteil der Aufnahme im Langloch der Sperrklinke zur Ausbildung der Gelenkverbindung geführt.

Nachteilig hierbei ist, dass zur Montage die Sperrklinke mit Druck über den Zapfen an der Betätigungsstange geschoben werden muss. Die metallische Sperrklinke reibt dabei stark an dem Zapfen der Betätigungsstange, welche typisch aus einem weicheren Kunststoffmaterial besteht. Durch diesen Montagevorgang entsteht ein erheblicher Verschleiß im Bereich des Zapfens, das heißt dieser wird verformt und abgetragen, so dass dieser rasch unbrauchbar wird.

Der Erfindung liegt die Aufgabe zugrunde, eine Betätigungsvorrichtung der eingangs genannten Art so auszubilden, dass diese bei möglichst geringem Gewicht und geringen Herstellkosten eine möglichst sichere Funktion aufweist.

Zur Lösung dieser Aufgabe sind die Merkmale des Anspruchs 1 vorgesehen. Vorteilhafte Ausführungsformen und zweckmäßige Weiterbildungen sind in den Unteransprüchen beschrieben.

Die erfindungsgemäße Betätigungsvorrichtung weist eine Feststellbremse mit einem an einem Lagerbock schwenkbar gelagerten Handbremshebel, welcher mittels einer Festsetzeinrichtung in einer vorgegebenen Schwenkstellung fixierbar ist, auf. Die Festsetzeinrichtung weist ein am Lagerbock fixiertes Sperrsegment und eine beweglich gelagerte Sperrklinke, sowie eine im Handbremshebel geführte und in Wirkverbindung mit der Festsetzeinrichtung stehende Betätigungsstange auf. Der Handbremshebel weist eine Führung auf, in welcher die Betätigungsstange in Längsrichtung verschiebbar gelagert ist. Eine Gelenkverbindung ist zwischen der Sperrklinke und der Betätigungsstange dadurch herstellbar, dass ein Segment der Sperrklinke zwischen einem Anschlag und einem Federelement gelagert ist, welche Bestandteil der Betätigungsstange sind.

Durch den Anschlag und das Federelement wird mit konstruktiv einfachen Mitteln eine zuverlässige Gelenkverbindung zwischen der Betätigungsstange und der Sperrklinke geschaffen. Vorteilhaft hierbei ist insbesondere, dass die Gelenkverbindung ohne jegliche Werkzeuge oder Hilfsvorrichtungen hergestellt wird. Die Sperrklinke muss lediglich zwischen den Anschlag und das Federelement eingeschoben werden. Bei diesem Einschubvorgang tritt keinerlei Belastung oder Verschleiß der Einzelkomponenten auf, da aufgrund der elastischen Eigenschaften des Federelements dieses zurückfedern kann, wenn die Sperrklinke in den Zwischenraum zwischen Anschlag und Federelement eingeschoben wird. Entsprechendes gilt bei der Entnahme der Sperrklinke, das heißt das Lösen der Gelenkverbindung erfolgt ebenso verschleißfrei.

Andererseits wird durch die elastischen Eigenschaften des Federelements ein spielfreier, sicherer Halt der Sperrklinke zwischen dem Anschlag und dem Federelement erhalten. Damit wird nicht nur eine gegen Toleranzen der Einzelkomponenten unempfindliche, reproduzierbare Gelenkverbindung geschaffen. Insbesondere werden durch die spielfreie Lagerung der Sperrklinke auch unerwünschte Klappergeräusche vermieden, wenn die in einem Kraftfahrzeug eingebaute Betätigungsvorrichtung Erschütterungen ausgesetzt ist.

Ein weiterer wesentlicher Vorteil besteht darin, dass die Betätigungsstange mit dem Anschlag und dem Federelement aus einem Kunststoff-Spritzgussteil besteht.

Somit werden zur Ausbildung der Betätigungsstange und des Federelements keine zusätzlichen Teile oder Fertigungsschritte benötigt.

Besonders vorteilhaft sind der Anschlag und das Federelement an einem Ende der Betätigungsvorrichtung in deren Längsrichtung in Abstand gegenüberliegend angeordnet, wobei das zwischen dem Anschlag und dem Federelement gelagerte Segment der Sperrklinke von einem längsseitigen Ende der Sperrklinke gebildet ist.

In diesem Fall übernimmt die Gelenkverbindung zwischen Betätigungsstange und Sperrklinke zugleich die Funktion einer endseitigen Lagerung der Betätigungsstange. Dann braucht nur noch am anderen Ende der Betätigungsstange ein weiterer Lagerpunkt für diese vorgesehen sein, um eine ausreichende Zwangsführung der Betätigungsstange in der Führung des Handbremshebels zu erhalten.

In einer besonders vorteilhaften Ausführungsform der Erfindung weist die dem Federelement gegenüberliegende Seitenfläche des Anschlags eine Krümmung auf.

Hierdurch wird für die Gelenkverbindung eine effiziente und dennoch konstruktiv einfache Adaption der Linearbewegung der Betätigungsstange einerseits und der Schwenkbewegung der Sperrklinke andererseits erhalten.

In einer zweckmäßigen Ausgestaltung ist an dem längsseitigen Ende der Sperrklinke eine seitlich hervorstehende Nase vorgesehen, an welche die Oberseite des Anschlags anlegbar ist.

Mit der Nase der Sperrklinke wird auf einfache Weise eine Zwangsführung für die Betätigungsstange derart erzielt, dass sich diese nur in deren Längsrichtung und nicht quer hierzu bewegt.

Gemäß einer weiteren zweckmäßigen Ausgestaltung weist das Federelement zwei V-förmig angeordnete Stege auf, wobei einer der Stege an die Sperrklinke seitlich anlegbar ist.

Dabei weist der an die Sperrklinke anlegbare Steg ein quer abstehendes Endstück auf, welches an die Oberseite der Sperrklinke anlegbar ist.

Mit dem Steg wird eine lagestabile Ankopplung zwischen Sperrklinke und Federelement erhalten.

Besonders vorteilhaft sind der Anschlag und das Federelement zwischen zwei Seitenwandsegmenten der Betätigungsstange angeordnet.

Durch die Seitenwandsegmente weist die Betätigungsstange auch im Bereich der Gelenkverbindung eine hohe Stabilität auf.

Die Erfindung wird im Folgenden anhand der Zeichnungen erläutert. Es zeigen:
- Figur 1:: Betätigungsvorrichtung für eine Feststellbremse in einer Seiten- ansicht.
- Figur 2:: Betätigungsvorrichtung gemäß Figur 1 in einer Längsschnittdar- stellung.
- Figur 3:: Vergrößerter Teilausschnitt von Figur 2.
- Figur 4:: Perspektivische Teildarstellung der Betätigungsvorrichtung ge- mäß Figur 1.

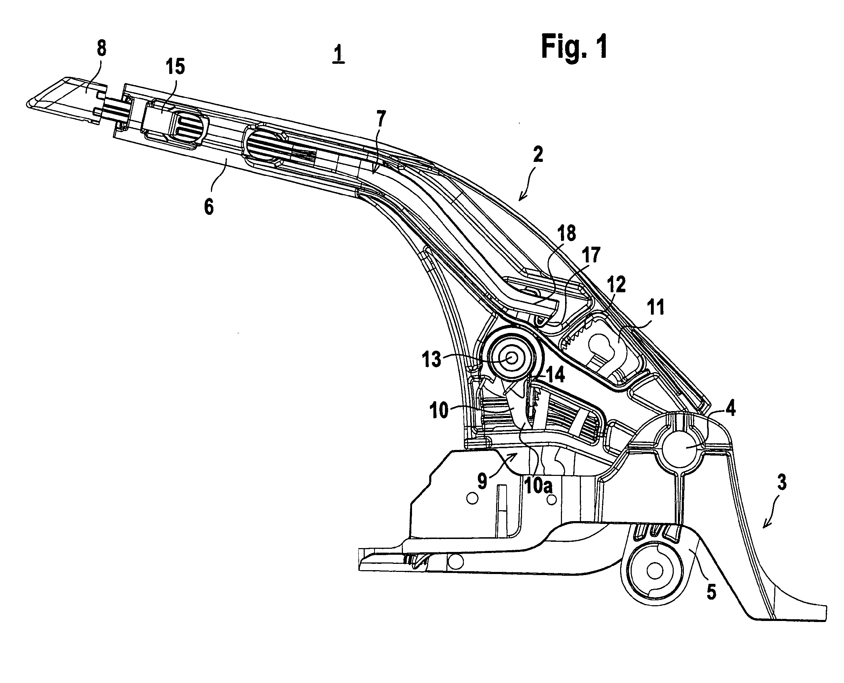

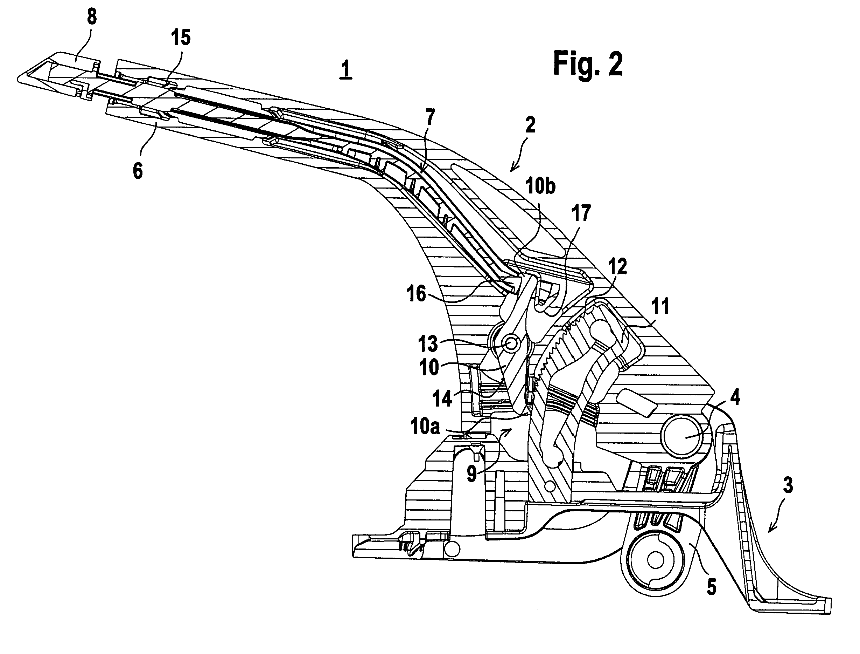

Die Figuren 1 und 2 zeigen ein Ausführungsbeispiel der erfindungsgemäßen Betätigungsvorrichtung 1 für eine Feststellbremse in einem Fahrzeug. Das Fahrzeug ist insbesondere von einem Kraftfahrzeug gebildet.

Die Betätigungsvorrichtung 1 weist einen Handbremshebel 2 auf, welcher schwenkbar an einem Lagerbock 3 gelagert ist. Der Lagerbock 3 besteht aus wenigstens einem Gussteil, wobei das Gussteil vorzugsweise aus einer Leichtmetall-Legierung besteht.

Der Handbremshebel 2 ist einstückig ausgebildet und besteht ebenfalls aus einem Gussteil. Das Gussteil besteht auch in diesem Fall aus einer Leichtmetall-Legierung. Vorzugsweise werden sowohl für den Lagerbock 3 als auch für den Handbremshebel 2 Aluminium- oder Magnesium-Legierungen verwendet. Der Handbremshebel 2 ist um eine horizontal verlaufende Schwenkachse gelagert. Dabei ist der Handbremshebel 2 an einer Drehlagerung 4 befestigt, an welcher auch ein Übertragungselement 5 befestigt ist.

Die jeweilige Stellung des Handbremshebels 2 wird über dieses Übertragungselement 5 auf die nicht dargestellte Feststellbremse des Fahrzeugs übertragen. Das Übertragungselement 5 kann von einem Seil, einem Kabel oder einer Stange gebildet sein.

Der Handbremshebel 2 weißt eine Führung 6 auf, in welcher eine Betätigungsstange 7, die im vorliegenden Fall von einem stangenförmigen Kunststoffteil gebildet ist, verschiebbar gelagert ist.

Wie aus den Figuren 1 und 2 ersichtlich, ist auf dem vorderen Rand der Betätigungsstange 7, welcher über das vordere Ende der Führung 6 hervorsteht, ein Druckknopf 8 aufgesetzt und dort mittels Rastmitteln und dergleichen fixiert.

Die Betätigungsstange 7 ist mit einer Festsetzeinrichtung 9 gekoppelt. Mit dieser Festsetzeinrichtung 9 kann der Handbremshebel 2 in einer vorgegebenen Schwenkstellung fixiert werden.

Die Festsetzeinrichtung 9 weist im Wesentlichen eine Sperrklinke 10 und ein Sperrsegment 11 auf. Das Sperrsegment 11 ist am Lagerbock 3 befestigt und weist eine Leiste mit Rastzähnen 12 auf.

Die Sperrklinke 10 ist an einer Schwenklagerung 13 um eine horizontal verlaufende Schwenkachse schwenkbar am Handbremshebel 2 gelagert und über eine Klinkenfeder 14 vorgespannt.

Die Schwenkachse läuft durch das Zentrum der Sperrklinke 10 und unterteilt diese in zwei beidseits zur Schwenkachse verlaufende Schwenkarme. Der erste Schwenkarm der Sperrklinke 10 ist an die Betätigungsstange 7 gekoppelt. Der zweite Schwenkarm der Sperrklinke 10 steht in Eingriff mit dem Sperrsegment 11. Hierzu weist die Sperrklinke 10 am vorderen Ende des zweiten Schwenkarmes eine Rastnase 10a auf, die an den Rastzähnen 12 des Sperrsegments 11 eingerastet werden kann. Dadurch ist der Handbremshebel 2 in einer vorgegebenen Schwenkstellung am Lagerbock 3 fixiert.

Zum Lösen der Sperrklinke 10 aus dem Sperrsegment 11 wird der Druckknopf 8 betätigt. Dadurch wird die Betätigungsstange 7 verschoben und die Sperrklinke 10 gegen die Federkraft der Klinkenfeder 14 vom Sperrsegment 11 abgelöst, da diese über eine Gelenkverbindung an die Betätigungsstange 7 gekoppelt ist. Dann kann der Handbremshebel 2 gegen den Lagerbock 3 geschwenkt werden.

Das obere Ende der Sperrklinke 10 bildet mit dem hinteren Ende der Betätigungsstange 7 eine Gelenkverbindung, die zugleich die Funktion einer Lagefixierung des hinteren Endes der Betätigungsstange 7 übernimmt. Außer dieser Lagefixierung ist nur noch am vorderen Ende der Betätigungsstange 7 eine Lagefixierung in Form einer Hülse 15 vorgesehen.

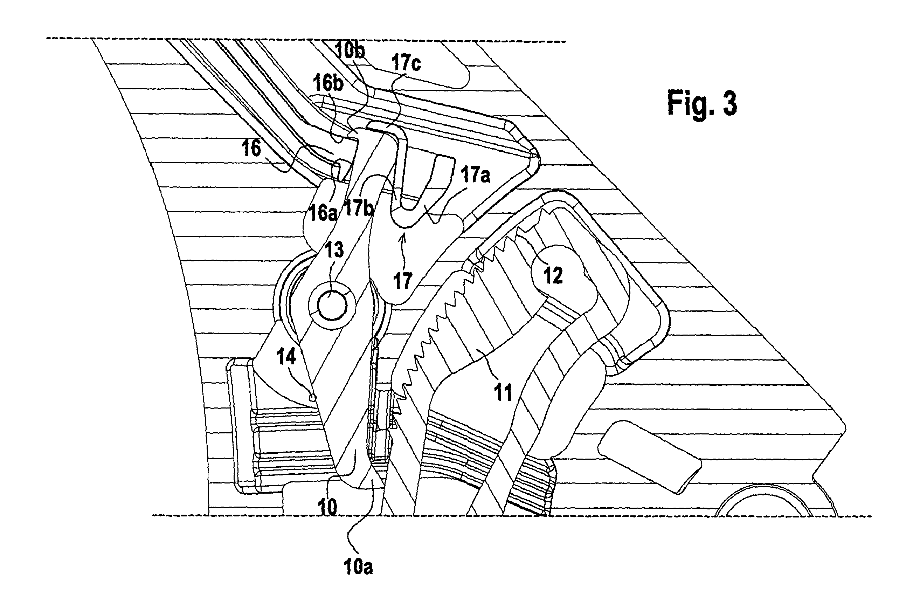

Wie aus Figur 2 ersichtlich und noch deutlicher in der vergrößerten Teildarstellung von Figur 3 dargestellt, weist die Betätigungsstange 7 zur Ausbildung der Gelenkverbindung mit der Sperrklinke 10 einen Anschlag 16 und ein Federelement 17 auf. Der Anschlag 16 und das Federelement 17 sind einstückig mit der Betätigungsstange 7 ausgebildet, welche aus einem Kunststoff-Spritzgussteil besteht. Der Anschlag 16 und das Federelement 17 sind in Längsrichtung der Betätigungsstange 7 in Abstand hintereinander angeordnet.

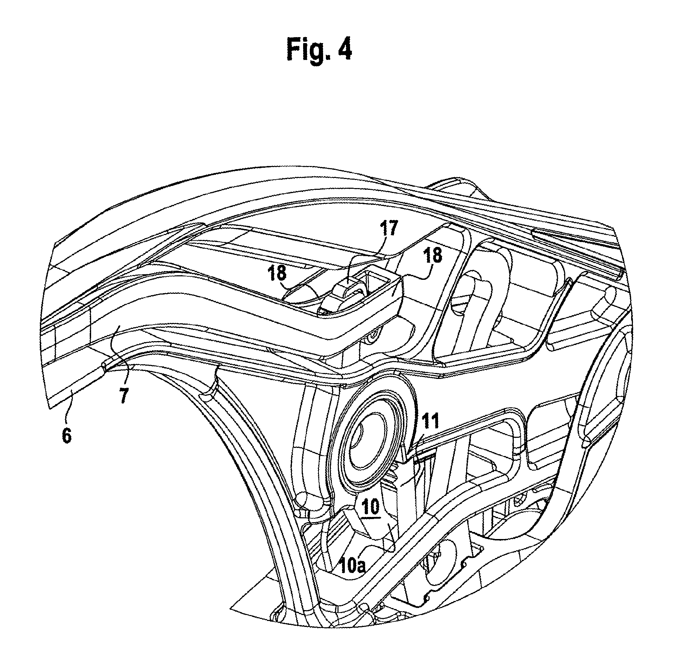

Wie aus Figur 1 und insbesondere der Detaildarstellung von Figur 4 ersichtlich, sind der Anschlag 16 und das Federelement 17 in einer Aussparung der Betätigungsstange 7 angeordnet, wobei diese Aussparung nach unten und oben offen ist und seitlich von zwei Seitenwandsegmenten 18 der Betätigungsstange 7 begrenzt ist.

Wie aus Figur 3 ersichtlich, weist der Anschlag 16 eine dem Federelement 17 zugewandete Seitenfläche 16a auf, die mit einer Krümmung versehen ist. Diese Krümmung ist an die anliegende Sperrklinke 10 so angepasst, dass eine genaue Anpassung, das heißt Adaption der Linearbewegung der Betätigungsstange 7 an die Schwenkbewegung der Sperrklinke 10 gegeben ist.

Wie aus Figur 3 weiter ersichtlich, weist das Federelement 17 zwei V-förmig angeordnete Stege 17a, 17b auf, wobei bei hergestellter Gelenkverbindung der Steg 17b an der Sperrklinke 10 anliegt. Am freien Ende des Stegs 17b ist ein seitlich abstehendes Endstück 17c vorgesehen.

Das mit der Betätigungsstange 7 die Gelenkverbindung bildende Segment der Sperrklinke 10 ist in Form eines Halses am oberen Ende der Sperrklinke 10 gebildet. Am oberen Rand dieses Halses mündet seitlich eine Nase 10b aus.

Zur Montage der Gelenkverbindung wird das obere Segment der Sperrklinke 10 in den Zwischenraum zwischen Anschlag 16 und Federelement 17 eingeschoben, bis die in den Figuren 1 bis 4 dargestellte Endposition erreicht ist. Durch die elastischen Eigenschaften des Federelements 17 federt dieses bei Einführen der Sperrklinke 10 zurück, dass der Einführvorgang ohne Verschleiß oder Beschädigungen an der Betätigungsstange 7 oder Sperrklinke 10 erfolgen kann. Dasselbe gilt bei Ausführen der Sperrklinke 10.

Befindet sich die Sperrklinke 10 in ihrer Endposition zwischen Anschlag 16 und Federelement 17, so ist sie dort durch die Federkraft des Federelements 17 spielfrei gehalten. Die damit ausgebildete Gelenkverbindung führt durch die Krümmung der Seitenfläche 16a des Anschlags 16 zu einer genauen Umsetzung zwischen der Linearbewegung der Betätigungsstange 7 und der Schwenkbewegung der Sperrklinke 10.

Die Nase 10b der Sperrklinke 10 liegt bei hergestellter Gelenkverbindung mit der Betätigungsstange 7 auf der Oberseite des Anschlags 16 auf. Dadurch wird eine Lagefixierung der Betätigungsstange 7 derart erhalten, dass diese nicht nach oben entweichen kann, da die Sperrklinke 10 selbst fest an der Schwenklagerung gehalten ist.

Weiterhin liegt das Endstück des Federelements 17 bei hergestellter Gelenkverbindung zwischen Sperrklinke 10 und Betätigungsstange 7 auf der Oberseite der Sperrklinke 10 auf. Durch den Steg 17b und das Endstück wird somit eine in zwei Raumrichtungen verlaufende Anlagefläche des Federelements 17 an der Sperrklinke 10 geschaffen. Dies führt zu einem sicheren Halt zwischen der Sperrklinke 10 und dem Federelement 17, was eine wesentliche Voraussetzung dafür ist, dass in beliebigen Schwenkstellungen der Sperrklinke 10 durch das Federelement 17 eine spielfreie Lagerung der Sperrklinke 10 zwischen Anschlag 16 und Federelement 17 erhalten wird.

### Bezugszeichenliste

- (1): Betätigungsvorrichtung
- (2): Handbremshebel
- (2a): Handgriff
- (3): Lagerbock
- (4): Drehlagerung
- (5): Übertragungselement
- (6): Führung
- (7): Betätigungsstange
- (8): Druckknopf
- (9): Festsetzeinrichtung
- (10): Sperrklinke
- (10a): Rastnase
- (10b): Nase
- (11): Sperrsegment
- (12): Rastzahn
- (13): Schwenklagerung
- (14): Klinkenfeder
- (15): Hülse
- (16): Anschlag
- (16a): Seitenfläche
- (16b): Oberseite
- (17): Federelement
- (17a): Steg
- (17b): Steg
- (17c): Endstück
- (18): Seitenwandsegment

## Patentansprüche

1. Betätigungsvorrichtung für eine Feststellbremse mit einem an einem Lagerbock schwenkbar gelagerten Handbremshebel, welcher mittels einer Festsetzeinrichtung in einer vorgegebenen Schwenkstellung fixierbar ist, wobei die Festsetzeinrichtung ein am Lagerbock fixiertes Sperrsegment und eine beweglich gelagerte Sperrklinke aufweist, und mit einer im Handbremshebel geführten und in Wirkverbindung mit der Festsetzeinrichtung stehenden Betätigungsstange, wobei der Handbremshebel eine Führung aufweist, in welcher die Betätigungsstange in Längsrichtung verschiebbar gelagert ist, **dadurch gekennzeichnet, dass** eine Gelenkverbindung zwischen der Sperrklinke (10) und der Betätigungsstange (7) **dadurch** herstellbar ist, dass ein Segment der Sperrklinke (10) zwischen einem Anschlag (16) und einem Federelement (17) gelagert ist, welche Bestandteil der Betätigungsstange (7) sind.

2. Betätigungsvorrichtung nach Anspruch 1, **dadurch gekennzeichnet, dass** die Betätigungsstange (7) mit dem Anschlag (16) und dem Federelement (17) von einem Kunststoff-Spritzgussteil gebildet ist.

3. Betätigungsvorrichtung nach einem der Ansprüche 1 oder 2, **dadurch gekennzeichnet, dass** das Segment der Sperrklinke (10) spielfrei zwischen dem Anschlag (16) und dem Federelement (17) gelagert ist.

4. Betätigungsvorrichtung nach einem der Ansprüche 1 bis 3, **dadurch gekennzeichnet, dass** der Anschlag (16) und das Federelement (17) an einem Ende der Betätigungsvorrichtung (1) in deren Längsrichtung in Abstand gegenüberliegend angeordnet sind.

5. Betätigungsvorrichtung nach einem der Ansprüche 1 bis 3, **dadurch gekennzeichnet, dass** das zwischen dem Anschlag (16) und dem Federelement (17) gelagerte Segment der Sperrklinke (10) von einem längsseitigen Ende der Sperrklinke (10) gebildet ist.

6. Betätigungsvorrichtung nach einem der Ansprüche 4 oder 5, **dadurch gekennzeichnet, dass** die dem Federelement (17) gegenüberliegende Seitenfläche des Anschlags (16) eine Krümmung aufweist.

7. Betätigungsvorrichtung nach einem der Ansprüche 5 oder 6, **dadurch gekennzeichnet, dass** an dem längsseitigen Ende der Sperrklinke (10) eine seitlich hervorstehende Nase (10b) vorgesehen ist, an welche die Oberseite des Anschlags (16) anlegbar ist.

8. Betätigungsvorrichtung nach einem der Ansprüche 1 bis 7, **dadurch gekennzeichnet, dass** das Federelement (17) zwei V-förmig angeordnete Stege (17a, 17b) aufweist, wobei einer der Stege (17b) an die Sperrklinke (10) seitlich anlegbar ist.

9. Betätigungsvorrichtung nach Anspruch 8, **dadurch gekennzeichnet, dass** der an die Sperrklinke (10) anlegbare Steg (17a) ein quer abstehendes Endstück (17c) aufweist, welches an die Oberseite der Sperrklinke (10) anlegbar ist.

10. Betätigungsvorrichtung nach einem der Ansprüche 1 bis 9, **dadurch gekennzeichnet, dass** der Anschlag (16) und das Federelement (17) zwischen zwei Seitenwandsegmenten (18) der Betätigungsstange (7) angeordnet sind.
